# EUROPÄISCHE PATENTSCHRIFT

(11) **EP 1 962 070 B1**
(45) Veröffentlichungstag und Bekanntmachung des Hinweises auf die Patenterteilung: **11.04.2012**
(21) Anmeldenummer: 07118985.6
(22) Anmeldetag: 22.10.2007
(51) Int. Cl.: G01K 7/18, G01K 1/12, G01K 15/00, G01K 7/16

(54) **Hochtemperatursensor und Verfahren zu dessen Überprüfung**
High temperature sensor and test method therefor
Capteur haute température et procédé pour sa vérification

(30) Priorität: 23.10.2006 DE 102006050253
(43) Veröffentlichungstag der Anmeldung: 27.08.2008
(73) Patentinhaber: UST Umweltsensortechnik GmbH, 98716 Geschwenda (DE)
(72) Erfinder: Kiesewetter, Olaf Dr., 98716 Geschwenda (DE); Melchert, Volkmar Dipl.-Ing., 98693 Martinroda (DE); Witz, Eva, 99330 Gräfenroda (DE); Ewert, Anatolij, 98693 Ilmenau (DE)
(74) Vertreter: Liedtke, Klaus

(56) Entgegenhaltungen:
- EP-A- 0 285 451
- WO-A-02/16919
- WO-A-2005/024354
- DE-C1- 3 733 192
- GB-A- 2 109 998
- GB-A- 2 267 967
- US-A1- 2003 006 876

## Beschreibung

Die Erfindung betrifft einen Hochtemperatursensor, bei dem auf einem Trägerkörper ein temperaturabhängiger Messwiderstand angeordnet ist und ein Verfahren zu dessen Überprüfung.

Bevorzugtes Einsatzgebiet ist die Verwendung in Temperaturmessstellen mit hohen mechanischen und thermischen Belastungen, wie sie beispielsweise in Abgasanlagen von Kraftfahrzeugen auftreten.

Zur Überwachung und Optimierung des Verbrennungsprozesses von Verbrennungsmotoren werden Temperaturfühler benötigt, deren Einsatzbereich bis zu Temperaturen von mehr als 1.000 °C reicht. An derartige Fühler werden neben hohen Forderungen an die Temperaturbeständigkeit auch Forderungen nach Beständigkeit gegen chemische und mechanische Belastungen gestellt.

Im Stand der Technik sind verschiedene Anordnungen beschrieben, die einzelne der vorgenannten Forderungen erfüllen sollen.

Beispielsweise wird die Messung der Temperatur von Metallschmelzen mit einem Tauch-Thermoelement durchgeführt, bei dem entweder die Messstelle des Thermopaares durch ein auswechselbares, einseitig geschlossenes Röhrchen aus Quarz geschützt ist, oder bei dem ein Quarzröhrchen mitsamt dem Thermoelement und einer Steckvorrichtung auswechselbar gestaltet ist. Bei den in Betracht kommenden sehr hohen Temperaturen von mehr als 1.000°C ist es erforderlich, dieses Schutzrohr bzw. den ganzen Messkopf häufig auszuwechseln.

Nach DE 102 36 036 B4 ist ein Hochtemperatursensor bekannt, bei dem ein Messwiderstand von einem keramischen Pulver umgeben ist und in einer keramischen Hülse angeordnet ist. Die Anordnung ist in einem metallischen Schutzrohr angeordnet.

Bei den bekannten Hochtemperatur-Messanordnungen ist nachteilig, dass diese infolge der hohen thermischen und chemischen Beanspruchungen Alterungsvorgängen unterliegen, die zu einer Veränderung der Parameter und damit zu Messfehlern führen.

Aufgabe der Erfindung ist es, ein Verfahren und einen Hochtemperatursensor der eingangs angegebenen Art anzugeben, mit denen Messungen in einem Temperatureinsatzbereich von mehr als 1.000°C dauerhaft durchgeführt werden können, wobei der Sensor hohen mechanischen und chemischen Belastungen standhält, kostengünstig hergestellt werden kann und darüber hinaus eine Überwachung der Messgenauigkeit ermöglicht werden soll.

Erfindungsgemäß wird diese Aufgabe mit einem Hochtemperatursensor, welcher die in Anspruch 1 angegebenen Merkmale aufweist, und mit einem Verfahren, welches die in Anspruch 7 angegebenen Merkmale aufweist, gelöst.

Vorteilhafte Ausgestaltungen des erfindungsgemäßen Hochtemperatursensors sind in den Unteransprüchen angegeben. Gegenstand der Erfindung sind auch Merkmalskombinationen bei denen die in der Beschreibung und/oder in den Ansprüchen angegebenen Einzelmerkmale beliebig miteinander kombiniert werden.

Bei dem erfindungsgemäßen Hochtemperatursensor ist der Trägerköper mit einer Nanoschicht aus Al₂O₃ versehen. Die Anschlüsse des Messwiderstandes sind in einer Parallelschaltung mit dem Isolationswiderstand des Trägerkörpers und dem kapazitiven Widerstand der Gesamtanordnung über äußeren Anschlussleitungen mit einer Auswerteelektronik verbunden, welche eine Schaltungsanordnung enthält, mit der die Überwachung von Veränderungen des Isolationswiderstandes erfolgt. Die Messwiderstände sind in Form einer Interdigitalstruktur auf dem Substrat aufgebracht.

Die Sensoren können durch die Nanoschicht aus Al₂O₃ gegen chemische Belastungen geschützt werden. Da die Nanoschicht beim ersten Schmelzen bereits bei einer niedrigeren Temperatur als bei einem nachfolgenden Erhitzen schmilzt, kann diese Schicht bei Temperaturen aufgebracht werden, die deutlich unter der späteren Einsatztemperatur liegt, so dass eine Anordnung erzeugt werden kann, die auch bei sehr hohen Temperaturen, bei der Platin bereits schmilzt, betrieben werden kann, da die Strukturen eines Platinwiderstands trotz sehr hoher Temperatur erhalten bleibt.

Vorteilhafte Ausführung sehen vor, dass der Trägerkörper aus einem Keramikplättchen besteht und dass der Trägerkörper in einer Schutzhülse aus Keramik angeordnet ist. Durch die Keramikausführung der Trägerplatte und der Schutzhülse wird ein dauerhafter Betrieb bei hohen Temperaturen ermöglicht, dessen Messgenauigkeit überprüft werden kann.

Durch Beaufschlagung der Messwiderstände mit Strömen unterschiedlicher Richtungen und durch Messen der Leerlaufspannung ist es möglich, sowohl eine Aussage über die Temperatur an der Messstelle als auch über die Veränderungen zu erhalten.

Die Erfindung wird im folgenden anhand eines Ausführungsbeispiels näher erläutert.

In den zugehörigen Zeichnungen zeigen:
- Figur 1: die Draufsicht auf eine Messanordnung mit zwei Anschlussflächen,
- Figur 2: die Draufsicht auf eine Messanordnung mit zwei Anschlussflächen und Interdigitalstruktur für eine Zusatzkapazität.
- Figur 3: die Seitenansicht der Anordnung nach Figur 2,
- Figur 4: die Draufsicht auf eine Messanordnung mit drei Anschlussflächen,
- Figur 5: die Draufsicht auf eine Ausführung mit Thermoelement,
- Figur 6: das Ersatzschaltbild einer Ausführung mit einem Messwiderstand, dem Isolationswiderstand und der Anordnungskapazität
und
- Figur 7: das Ersatzschaltbild einer Ausführung mit einem Zusatzwiderstand und einer Zusatzkapazität.

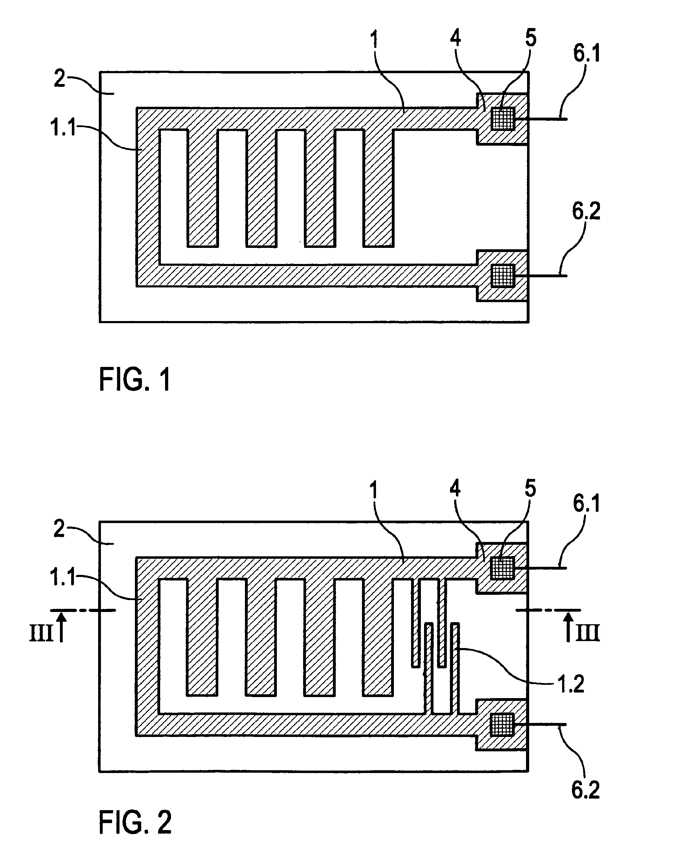

Bei der in **Figur 1** dargestellten Ausführungsform sind die Bauelemente auf einem Keramikträgerköper angeordnet, bei dem auf einem Substrat 3, welches aus einer polykristallienen Al₂O₃-Schicht besteht, eine einkristalline Nanoschicht 2, die vorzugsweise auch aus Al₂O₃ besteht, aufgebracht ist. Auf der Nanoschicht 2 ist der Messwiderstand R_{M} in Form einer Interdigitalstruktur 1 aufgebracht. Die Interdiditalstruktur 1 ist an den Anschlussflächen 4 mittels Pads 5 elektrisch mit den Anschlussleitungen 6.1 und 6.2 verbunden. Die Anschlussleitungen 6.1 und 6.2 führen zu einer hier nicht dargestellten elektronischen Auswerteeinheit. Damit ist es möglich, Veränderungen des Isolationswiderstandes R_{I}, die eine Verfälschung des Messergebnisses hervorrufen, zu ermitteln. Hierzu kann in bestimmten zeitlichen Abständen, eine Gleichspannung wechselnder Polarität oder eine hochfrequente Wechselspannung angelegt werden und der komplexe Widerstand an den Anschlussstellen 4.1 und 4.2 ermittelt werden. Dabei werden Veränderungen des Isolationswiderstandes R_{I} erfasst, aus denen Veränderungen der Widerstandswerte und damit die Messgenauigkeit überprüft werden.

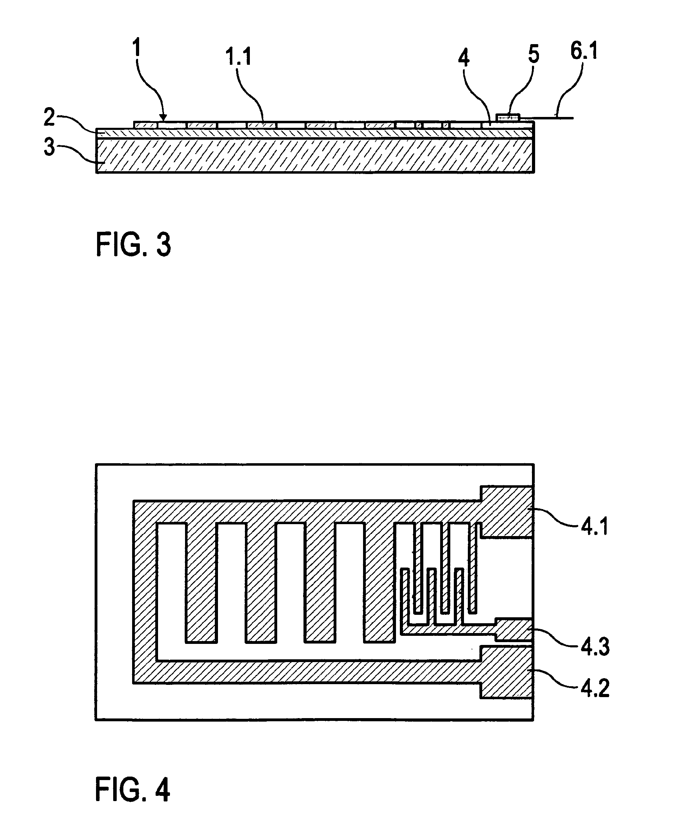

Die in den **Figuren 2** **und** **3** dargestellte Interdigitalstruktur 1 besteht aus der ersten Interdigitalstruktur 1.1 für den ohmschen Messwiderstand R_{M} und einer zweiten Interdigitalstruktur 1.2 für eine Zusatzkapazität C₂. Die Zusatzkapazität C₂ wirkt parallel zur der Anordnung innewohnenden Anordnungskapazität C₁.

**Figur 4** erläutert eine Anordnung, bei der neben den beiden Anschlussflächen 4.1 und 4.2 für die elektrischen Anschlüsse der Anschlussleitungen 6.1 und 6.2 eine gesonderte Anschlussfläche 4.3 für die Zusatzpapazität C₂ angeordnet ist. Dies ermöglicht eine permanente Überwachung auftretender Veränderungen.

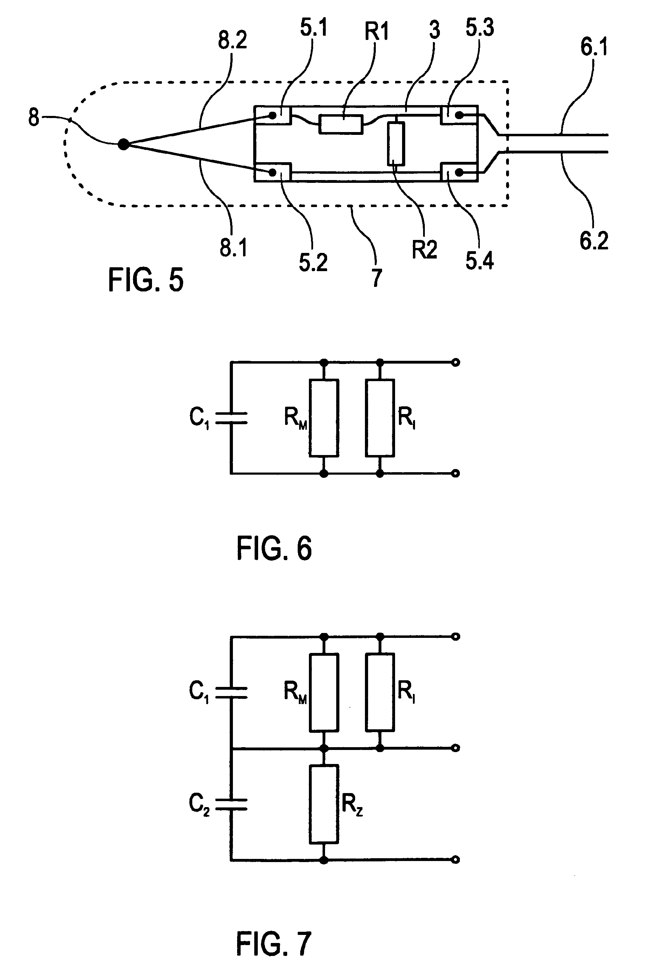

Der in Figur 5 dargestellte Hochtemperatursensor weist ein außerhalb des Trägerkörpers 3 angeordnetes Thermoelement 8 auf, dessen Anschlussleitungen 8.1 und 8.2 zum Trägerkörper 3 führen, der aus einem Keramikplättchen besteht. Der rechteckige Keramikträger 3 weist an seinen Ecken Verbindungsstellen 5 auf, die die elektrische Verbindung der Bauelemente ermöglichen. Der Anschluss von Verbindungsleitungen an die Verbindungsstellen 5 erfolgt zweckmäßig durch Schweißen. Die Anschlussleitungen 8.1 und 8.2 sind an die Verbindungsstellen 5.1 und 5.2. angeschlossen. Von der Verbindungsstelle 5.1 führt eine Leitung zu einer Seite eines ersten Platin-Dünnschicht-Widerstandes R₁. Die zweite Seite des Platin-Dünnschicht-Widerstandes R₁ ist mit der Verbindungsstelle 5.3 und einem Anschluss eines zweiten Platin-Dünnschicht-Widerstandes R₂ verbunden. Der zweite Anschluss des Platin-Dünnschicht-Widerstandes R₂ ist mit den Verbindungsstellen 5.3 und 5.4 verbunden. Von den Verbindungsstellen 5.3 und 5.4 führen äußere Anschlussleitungen 6.1 und 6.2 zu einer hier nicht dargestellten Auswerteeinheit, welche wahlweise die vom Thermoelement 8 ermittelte Temperatur erfasst oder die Messgenauigkeit überprüft. Die gesamte Anordnung ist in einer Schutzhülse 7 aus Keramik untergebracht. Dabei kann die Anordnung so betrieben werden, dass nur der vordere Bereich der Anordnung, der das Thermoelement 8 beinhaltet, der höchsten Temperatur - die beispielsweise 1.500 °C betragen kann - ausgesetzt wird und der übrige Bereich, der die restlichen Bauelemente beinhaltet, sich an Stellen befindet, an denen geringere Temperaturen - beispielsweise 800 °C - herrschen.

Zur Überprüfung der Messgenauigkeit werden die Verbindungsstellen 5.3 und 5.4 mit einer elektrischen Gleichspannungsquelle verbunden, wobei Messungen mit unterschiedlicher Polarität erfolgen. Hierzu wird in einem Fall die eingespeiste Spannung der vom Thermoelement erzeugten Spannung addiert und in einem zweiten Fall bei entgegen gesetzter Polung der Gleichspannungsquelle die Differenz dieser beiden Spannungen ermittelt. Aus der Größe der Differenz zwischen diesen beiden Messungen können Aussagen zu Veränderungen der Widerstandswerte gewonnen werden.

In Figur 6 ist das Ersatzschaltbild einer Ausführung mit zwei Anschlüssen angegeben. Die Ausführung enthält zwei Widerstände, wovon einer den Isolationswiderstand Rᵢ der Gesamtanordnung und der andere einen Messwiderstand R_{M} darstellt. Der elektrische Widerstandswert des Isolationswiderstandes Rᵢ liegt bei Werten, die größer als 100 MOhm sind. Als Messwiderstand R_{M} dient ein handelsüblicher Platinmesswiderstand Pt 100 mit einem Widerstandswert von 100 Ohm. Der an den elektrischen Anschlüssen messbare Wert wird durch die Widerstände Rᵢ und R_{M} sowie die Anordnungskapazität C₁ bestimmt.

Figur 7 erläutert das Ersatzschaltbild einer Ausführung, bei der ein Zusatzwiderstand R_{z} sowie eine Zusatzkapazität C₂ angebracht ist. Die Ausführung enthält drei elektrische Anschlüsse.

### BEZUGSZEICHENLISTE

- 1: Interdigitalstruktur
- 1.1: erste Interdigitalstruktur für ohmschen Messwiderstand
- 1.2: zweite Interdigitalstruktur für Zusatzkapazität
- 2: Nanoschicht
- 3: Substrat
- 4: Anschlussfläche
- 4.1, 4.2: Anschlussfächen für ohmschen Messwiderstand
- 4.3: Anschlusfläche für Zusatzkapazität
- 5: Pads
- 6: Anschlussleitungen
- 7: Schutzhülse
- 8: Thermoelement
- 8.1; 8.2: Anschlussleitungen des Thermoelements
- Rᵢ: Isolationswiderstand
- R_{M}: Messwiderstand
- R_{Z}: Zusatzwiderstand
- R1: erster Widerstandssensor
- R2: zweiter Widerstandssensor
- C₁: Anordnungskapazität
- C₂: Zusatzkapazität

## Patentansprüche

1. Hochtemperatursensor, bei dem auf einem Trägerkörper (3) ein temperaturabhängiger Messwiderstand (R_{M}) angeordnet ist, **dadurch gekennzeichnet, dass** der Trägerköper (4) aus einem Keramikplättchen besteht und mit einer gegen chemische Belastungen schützenden Nanoschicht (2) aus Al₂O₃ versehen ist, wobei der Messwiderstand (R_{M}) in Form einer Interdigitalstruktur (1) aufgebracht ist und die Anschlüsse des Messwiderstandes (R_{M}) in einer Parallelschaltung mit dem Isolationswiderstand (R₁) des Trägerkörpers und dem kapazitiven Widerstand der Gesamtanordnung über äußeren Anschlussleitungen (6.1, 6.2) mit einer Auswerteelektronik verbunden sind.

2. Hochtemperatursensor nach Anspruch 1, **dadurch gekennzeichnet, dass** auf dem Trägerkörper (3) mindestens vier Verbindungsstellen (5.1, 5.2, 5.3, 5.4) angeordnet sind, von denen zwei erste der Verbindungsstellen (5.1, 5.2) mit einem außerhalb des Trägerkörpers (3) angeordneten Thermoelement (8) verbunden sind und zwei weitere der Verbindungsstellen (5.3, 5.4) mit den äußeren Anschlussleitungen (6.1, 6.2) verbunden sind und auf dem Trägerkörper (3) ein erster elektrischer Widerstandssensor (R₁) und ein zweiter elektrischer Widerstandssensor (R₂) angeordnet sind, wobei von einer der ersten Verbindungsstellen (5.1) eine Leitung zu einer Seite des ersten Widerstandssensors (R₁) führt und die zweite Seite des ersten Widerstandssensors (R₁) mit einer der weiteren Verbindungsstellen (5.3) und einem ersten Anschluss des zweiten Widerstandssensors (R₂) verbunden ist und der zweite Anschluss des zweiten Widerstandssensors (R₂) mit der anderen der ersten Verbindungsstellen (5.2) und der anderen der weiteren Verbindungsstellen verbunden ist.

3. Hochtemperatursensor nach Anspruch 1 oder 2, **dadurch gekennzeichnet, dass** die äußeren Anschlussleitungen (6.1, 6.2) zu einer Auswerteeinheit führen, die eine Schaltungsanordnung zur Ermittlung der Temperatur und/oder zur Überprüfung der Messgenauigkeit enthält.

4. Hochtemperatursensor nach Anspruch 1, **dadurch gekennzeichnet, dass** die Interdigitalstruktur (1) aus einer ersten Interdigitalstruktur (1.1) für einen ohmschen Widerstand und einer zweiten Interdigitalstruktur (1.2) für eine Zusatzkapazität (C₂) besteht.

5. Hochtemperatursensor nach einem der vorhergehenden Ansprüche, **dadurch gekennzeichnet, dass** der Trägerkörper in einer Schutzhülse (7) aus Keramik angeordnet ist.

6. Hochtemperatursensor nach einem der vorhergehenden Ansprüche, **dadurch gekennzeichnet, dass** die Nanoschicht (2) die Interdigitalstruktur überdeckt.

7. Verfahren zur Überprüfung eines Hochtemperatursensors, bei dem auf einem Trägerkörper ein temperaturabhängiger Messwiderstand (R_{M}) angeordnet ist, **dadurch gekennzeichnet, dass** die Anschlüsse des Messwiderstandes (R_{M}) in einer Parallelschaltung mit dem Isolationswiderstand (R₁) des Trägerkörpers und dem kapazitiven Widerstand der Gesamtanordnung mit äußeren Anschlussleitungen (6.1, 6.2) verbunden sind, an denen in wählbaren Zeitabständen eine Spannung wechselnder Polarität angelegt wird und aus einer Veränderungen des komplexen Widerstandes der Gesamtanordnung Aussagen zur Messgenauigkeit abgeleitet werden.

8. Verfahren nach Anspruch 7, **dadurch gekennzeichnet, dass** an den äußeren Anschlussleitungen (6.1, 6.2) eine hochfrequente Wechselspannung angelegt wird.

## Claims

1. High-temperature sensor, in which a temperature-dependent measuring resistor (RM) is located on a substrate (3), **characterized in that** the substrate (4) consists of a ceramic chip and is provided with a nano layer (2) consisting of A 1203 and providing protection against chemical exposure, where the measuring resistor (RM) is applied in the form of an interdigital structure (1) and the connections of the measuring resistor (RM) are connected in a parallel connection with the insulation resistor (R1) of the substrate and the capacitive resistor of the overall arrangement via the external connecting lines (6.1, 6.2) to an electronic evaluation unit.

2. High-temperature sensor as claimed in claim 1, **characterized in that** at least four connecting points (5.1, 5.2, 5.3, 5.4) are arranged on the substrate (3), among which two first of the connecting points (5.1, 5.2) are connected to a thermocouple (8) arranged outside the substrate (3), and two further of the connecting points (5.3, 5.4) are connected with the external connecting lines (6.1, 6.2), and a first electrical resistive sensor (R1) and a second electrical resistive sensor (R2) are arranged on the substrate (3), while a line from one of the first connecting points (5.1) leads to one side of the first resistive sensor (R1) and the second side of the first resistive sensor (R1) is connected to one of the further connecting points (5.3) and to a first connection of the second resistive sensor (R2), and the second connection of the second resistive sensor (R2) is connected to the other of the first connecting points (5.2) and to the other of the further connecting points.

3. High-temperature sensor as claimed in claim 1 or 2, **characterized in that** the external connecting lines (6.1, 6.2) lead to an evaluation unit which contains a circuit arrangement for the determination of the temperature and/or for the verification of the accuracy of measurement.

4. High-temperature sensor as claimed in claim 1, **characterized in that** the interdigital structure (1) consists of a first interdigital structure (1.1) for an ohmic resistor and of a second interdigital structure (1.2) for an additional capacitor (C2).

5. High-temperature sensor as claimed in any preceding claim, **characterized in that** the substrate is arranged in a protective sleeve (7) consisting of ceramics.

6. High-temperature sensor as claimed in any preceding claim, **characterized in that** the nano layer (2) covers the interdigital structure.

7. Procedure for the verification of a high-temperature sensor, in which a temperature-dependent measuring resistor (RM) is arranged on a substrate, **characterized in that** the connections of the measuring resistor (RM) are connected in a parallel connection with the insulation resistor (R1) of the substrate and the capacitive resistor of the overall arrangement to external connecting lines (6.1, 6.2) at which a voltage is applied in a changing polarity at selectable time intervals, and statements on the accuracy of measurement are derived from a variations in the complex impedance of the overall arrangement.

8. Procedure as claimed in claim 7, **characterized in that** a high-frequency alternating voltage is applied at the external connecting lines (6.1, 6.2).

## Revendications

1. Capteur hautes températures, où une résistance de mesure (R_{M}) sensible à la température est disposée sur un corps support (3), **caractérisé en ce que** le corps support (4) se compose d'une plaquette en céramique et est doté d'une nanocouche (2) en Al₂O₃, la résistance de mesure (R_{M}) étant appliquée sous la forme d'une structure interdigitale (1) et les connexions de la résistance de mesure (R_{M}) en montage parallèle à la résistance d'isolement (R₁) du corps support et à la résistance capacitive du système d'ensemble étant reliées à une électronique d'évaluation par des lignes de connexion extérieures (6.1, 6.2).

2. Capteur hautes températures selon la revendication 1, **caractérisé en ce qu'**au moins quatre points de connexion (5.1, 5.2, 5.3, 5.4) sont disposés sur le corps support (3), les deux premiers desdits points de connexion (5.1, 5.2) étant reliés à un thermoélément (8) disposé à l'extérieur du corps support (3), les deux autres points de connexion (5.3, 5.4) étant reliés aux lignes de connexion extérieures (6.1, 6.2), un premier capteur de résistance électrique (R₁) et un deuxième capteur de résistance électrique (R₂) étant disposés sur le corps support (3), une ligne menant vers un côté du premier capteur de résistance (R₁) depuis l'un des premiers points de connexion (5.1), le deuxième côté du premier capteur de résistance (R₁) étant relié à l'un des autres points de connexion (5.3) et à une première connexion du deuxième capteur de résistance (R₂), et la deuxième connexion du deuxième capteur de résistance (R₂) étant reliée à l'autre premier point de connexion (5.2) et au deuxième des autres points de connexion.

3. Capteur hautes températures selon la revendication 1 ou la revendication 2, **caractérisé en ce que** les lignes de connexion extérieures (6.1, 6.2) mènent à une unité d'évaluation qui contient un montage de circuit pour déterminer la température et/ou contrôler la précision de mesure.

4. Capteur hautes températures selon la revendication 1, **caractérisé en ce que** la structure interdigitale (1) se compose d'une première structure interdigitale (1.1) pour une résistance ohmique et d'une deuxième structure interdigitale (1.2) pour une capacité additionnelle (C₂).

5. Capteur hautes températures selon l'une des revendications précédentes, **caractérisé en ce que** le corps support est disposé dans une douille de protection (7) en céramique.

6. Capteur hautes températures selon l'une des revendications précédentes, **caractérisé en ce que** la nanocouche (2) recouvre la structure interdigitale.

7. Procédé de contrôle d'un capteur hautes températures, où une résistance de mesure (R_{M}) sensible à la température est disposée sur un corps support, **caractérisé en ce que** les connexions de la résistance de mesure (R_{M}) en montage parallèle à la résistance d'isolement (R₁) du corps support et à la résistance capacitive du système d'ensemble sont reliées à une électronique d'évaluation par des lignes de connexion extérieures (6.1, 6.2) sur lesquelles une tension de polarité alternative est appliquée à intervalles temporels sélectionnables, et **en ce que** des variations de la résistance complexe du système d'ensemble permettent de déduire des affirmations sur la précision de mesure.

8. Procédé selon la revendication 7, **caractérisé en ce qu'**une tension alternative à haute fréquence est appliquée sur les lignes de connexion extérieures (6.1, 6.2).
